(19) Europäisches Patentamt

European Patent Office

Office européen des brevets

(11) **EP 1 070 662 B1**

(12) **EUROPÄISCHE PATENTSCHRIFT**

(45) Veröffentlichungstag und Bekanntmachung des Hinweises auf die Patenterteilung:
**11.06.2003 Patentblatt 2003/24**

(51) Int Cl.⁷: $B64C\ 27/33$, $B64C\ 27/51$

(21) Anmeldenummer: **99114044.3**

(22) Anmeldetag: **20.07.1999**

(54) **Rotorblatt für einen lagerlosen Rotor eines Hubschraubers**

Rotorblade for a bearingless helicopter rotor

Pale pour rotor d'hélicoptère du type sans roulements

(84) Benannte Vertragsstaaten:
**DE FR GB IT**

(43) Veröffentlichungstag der Anmeldung:
**24.01.2001 Patentblatt 2001/04**

(73) Patentinhaber: **Eurocopter Deutschland GmbH**
**86609 Donauwörth (DE)**

(72) Erfinder:
• **Bauer, Karl**
**83666 Schaftlach (DE)**
• **Kuntze-Fechner, Gerald**
**83666 Waakirchen (DE)**
• **Hausmann, Gerhard**
**81737 München (DE)**
• **Enenkl, Bernhard**
**85461 Bockhorn (DE)**

(74) Vertreter: **Baum, Wolfgang, Dipl.-Ing.**
**EADS Deutschland GmbH**
**Patentabteilung LG-PM**
**Willy-Messerschmitt-Strasse**
**85521 Ottobrunn (DE)**

(56) Entgegenhaltungen:
**EP-A- 0 097 885** **EP-A- 0 155 444**
**EP-A- 0 315 962** **US-A- 4 676 720**
**US-A- 5 820 344**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft ein Rotorblatt für einen lagerlosen Rotor eines Hubschraubers, wobei das Rotorblatt einen Flexbeam mit integriertem schlag-, schwenk- und torsionsweichen Bereichen besitzt, der am Rotorkopf befestigt ist und der in Rotorblattlängsrichtung in einem übergangsbereich in das auftrieberzeugende Blatt übergeht, wobei eine torsionssteife Steuertüte an der Wurzel des Flexbeam beweglich abgestützt ist und die Steuertüte in Blattlängsrichtung bis zu ihrem Ende den Flexbeam umhüllt und Dämpfungselemente angeordnet sind zur Dämpfung des rotierenden Rotorblatts in der Schwenkebene.

Die Rotorblätter werden bei Betrieb des Hubschraubers in verschiedenen Richtungen ausgelenkt und dadurch stark belastet. Das Rotorblatt bei einem lagerlosen Rotor besitzt am inneren Ende zum Rotorkopf hin ein biege- und torsionsweiches Strukturelement (genannt Flexbeam), das die Bewegungen in Schlag-, Schwenkrichtung und die Winkelauslenkung um die Torsionsachse zuläßt. Rotorblätter für Hubschrauber sind deshalb überwiegend aus Faserverbund-Werstoff hergestellt. Außerdem überträgt der Flexbeam die Fliehkräfte des Blattes auf den Rotorkopf. Der torsionsweiche Bereich des Flexbeam befindet sich innerhalb einer torsionssteifen Steuertüte, über die die Steuerbewegungen in den auftrieberzeugenden Blattbereich des Rotorblattes eingeleitet werden. Damit der Flexbeam separat gefertigt bzw. bei Beschädigung ausgetauscht werden kann, wird oft eine Trennstelle zwischen Flexbeam und auftrieberzeugenden Blattbereich eingebaut. Das Rotorblatt ist in einem solchen Fall zweistückig ausgebildet. Gleichzeitig kann diese Trennstelle für eine Blattfaltung genutzt werden. Bei der Blattfaltung kann ein auftrieberzeugendes Blatt an der Trennstelle durch Entfernung eines Verbindungsmittels in eine solche Richtung geschwenkt werden, so daß ein Hubschrauber platzsparender in einem Transportmittel untergebracht werden kann als üblicherweise.

Die torsionssteife Steuertüte ist mit einer Steuerung verbunden. Über die Steuertüte ist eine Steuerbewegung in den auftrieberzeugenden Blattbereich einleitbar. Als Steuerbewegung ist eine Winkelauslenkung des Rotorblatts um die Torsionsachse (entspricht der Mittellängsachse) des Flexbeam zu verstehen. Beim rotierenden Rotorblatt kommt es im Zusammenhang mit einer Auslenkung zu einer Schwenkung (Schwenkung aus der Rotorblattlängsachse) des Blattbereichs innerhalb einer Ebene, der Schwenkebene, die im wesentlichen mit der Rotationsebene des Rotorblatts identisch ist.

Um ausreichende Boden- und Luftresonanzstabilität sicherzustellen, muß die Schwenkbewegung des Rotorblattes gedämpft werden. Für diese Dämpfung sind Dämpfer (Dämpfungselemente) notwendig. Sehr oft bestehen diese Dämpfungselemente (aus Gründen der Steifigkeit) aus einem mehrschichtigen Elastomerverbund. Die notwendige Dämpfung entsteht durch die periodische Schubverzerrung dieser Elastomerschichten. Bei bisher bekannten Rotorblättern sind die Dämpfungselemente zwischen Anschluß des Rotorblattes (der Wurzel des Flexbeam) am Rotorkopf und dem schwenkweichem Bereich des Flexbeam angeordnet.

Bei der DE 35 26 470 C1 sind weiterhin die Dämpfungselemente auf der Außenwandung der Steuertüte in Nähe des rotorkopfnahen Randes der Steuertüte, d. h. oberhalb bzw. unterhalb des Flexbeam angeordnet und damit oberhalb und unterhalb der Schwenkebene des Rotorblatts angeordnet. Durch den großen Abstand des Dämpfungselements zum fiktiven Schwenkgelenk (entspricht dem schwenkweichen Bereich) ergeben sich verhältnismäßig große Verschiebewege der Dämpferschichten. Diese relativ großen Verschiebewege erfordern jedoch im Hinblick auf eine ausreichende Lebensdauer auch eine große Bauhöhe des Dämpfungselementes. Die Bauhöhe des Dämpfungselements und die Anordnung oberhalb bzw. unterhalb des Flexbeam beeinflussen die Aerodynamik nachteilig. Bei außenliegenden Dämpfungselementen können zudem Probleme mit der Freigängigkeit von Steuerstangen oder Rotorkopfabdeckungen auftreten. Hochbauende Dämpfungselemente bestehen aus mehreren Elastomerschichten, zwischen denen sich steife Schichten befinden, um die Axiallasten aufzunehmen. Diese Dämpfer sind aufwendig zu fertigen und somit teuer. Damit keine Dämpfungsverluste auftreten muß die Befestigung der Dämpfungselemente und deren Krafteinleitung spielfrei und sehr steif ausgeführt werden.

Die DE 37 07 333 A1 kennt das Problem, daß wegen möglicher instabiler Schwingungen des Rotorblattes (insbesondere während des Rotoranlaufs und -auslaufs) eine Dämpfung der Schwenkbewegung des Blattes erforderlich wird. Das Dokument lehrt, wie durch die Anlenkung der Steuerstange das Problem gelöst werden kann. Die Lösung sieht vor, Dämpfer beiderseits der Wurzel eines einstückig ausgebildeten Rotorblatts anzuordnen. Die Wurzel ist am Rotorkopf befestigt und Teil eines Flexbeam. Die Anlenkung der Steuerstange erfolgt gemäß der bekannten Lösung unmittelbar an einem zwischen Dämpfungseinrichtung und Strebe angeordneten steifen Verbindungsglied. Trotz einer Verlagerung der Dämpfer von der Außenfläche der Steuertüte in den Innenbereich der Steuertüte und damit näher in den Bereich der Flexbeamwurzel, existieren dennoch relativ große Verschiebungen der Dämpferschichten, da auch hier der Abstand des Dämpfungselements zum fiktiven Schwenkgelenk immer noch verhältnismäßig groß ist. Diese Beanspruchung erfordert mit Blick auf eine ausreichende Lebensdauer eine große Bauhöhe der Dämpfer. Solche Dämpfer sind außerdem aufwendig in der Fertigung und ebenso teuer. Der bekannten Lösung gelang lediglich eine Verbesserung der aerodynamischen Verhältnisse an der Steuertüte.

Die DE 29 27 263 A1 zeigt keine veränderte Anordnung der Dämpfungselemente. Auch dort befinden sich die Dämpfungselemente im Bereich der Wurzel des Flexbeams.

Die DE 37 34 592 A1 erbringt die Verbesserung, daß die im Bereich der Wurzel des Flexbeam angeordnete Dämpfungseinrichtung in der Schwenkebene positioniert ist. Dennoch existieren relativ große Auslenkungen für das einzelne Dämpfungselement. Es werden weiterhin relativ große Bauhöhen des Dämpfungselements notwendig.

Aufgabe der Erfindung ist es, an einem Rotorblatt für einen lagerlosen Rotor eines Hubschraubers, die Dämpfung der Schwenkbewegung weiter zu verbessern.

Die Aufgabe wird dadurch gelöst, daß die Dämpfungselemente angeordnet sind zwischen dem schwenkweichen Bereich des Flexbeam (entspricht einem fiktiven Schwenkgelenk) und dem Ende des Übergangsbereiches des Rotorblattes, wobei diese Dämpfungselemente in der Schwenkebene des Rotorblattes im wesentlichen seitlich vom Flexbeam liegen und die Dämpfungselemente dort mit dem Flexbeam und der Steuertüte verbunden sind.

Durch diese Gestaltung wird das Übersetzungsverhältnis von "Schwenkbewegung des Rotorblatts zu Dämpferverschiebung" verändert, welches zu geringerer Auslenkung des Dämpfungselements führt. Bei der Dämpferverschiebung erhalten die dämpfenden Elastomerschichten eines Dämpfungselements eine zeitweise Schubverzerrung gegenüber ihrer Ausgangslage (Ruhelage). Eine Projektion der oberen, ausgelenkten Elastomerschicht auf die untere Elastomerschicht zeigt bei einer Schubverzerrung einen veränderten Überdeckungsgrad. Diese Schubverzerrung wird auch Dämpferauslenkung genannt. Ein Vorteil der geringeren Dämpferauslenkung besteht darin, daß die Projektion der oberen, ausgelenkten Dämpferplatte auf die untere Dämpferplatte einen großen Überdeckungsgrad aufweist, so daß sich dadurch geringere Momente und damit ein niedrigeres Schubspannungsniveau ergeben. Der Grad der Beanspruchung des Dämpfungselements wird damit verringert. Die Bauhöhe eines Dämpfungselements kann deutlich reduziert werden.

Der Vorteil Dämpfungselemente geringerer Bauhöhe einzusetzen, eröffnet auch die Möglichkeit den von der Steuertüte umhüllten Raum besser auszunutzen bzw. die Steuertüte aerodynamisch günstiger zu gestalten. Die Steuertüte kann kompakter gestaltet werden.

Eine Verkleidung des Rotorkopfes kann aerodynamisch günstiger realisiert werden. Vorteilhafterweise können Dämpfungselemente so angeordnet werden, daß alle Dämpfungselemente gleich belastet werden, wodurch ein vorzeitiger Ausfall einzelner Elemente weitgehend vermieden wird.

Die Dämpfungselemente sind innerhalb der Steuertüte angeordnet. Der Abstand des einzelnen Dämpfungselements gegenüber der Mittellängsachse des Flexbeams ist dabei besonders gering. Damit ergeben sich besonders kleine Wege der Auslenkung der Elastomerschicht. Nach einer Ausgestaltung (Anspruch 2) ist vorgesehen, daß das Dämpfungselement lösbar mit der umhüllenden Steuertüte und dem Rotorblatt verbunden ist. Diese Gestaltung ermöglicht eine rasche Austauschbarkeit des Dämpfungselements, wenn erforderlich.

Nach einer weiteren Ausgestaltung (Anspruch 3) ist das Dämpfungselement einerseits an einer Befestigungsplatte befestigt, die den Flexbeam mit dem auftriebererzeugenden Blatt verbindet und andererseits mit der Steuertüte befestigt. Dort erfolgt die Befestigung unmittelbar an der umgebenden Mantelfläche der Steuertüte.

Um die Baugröße der Steuertüte gering zu halten und somit die Steuertüte aerodynamisch zu optimieren, kann es erforderlich sein, die Dämpferquerschnittsfläche gering zu halten. Dabei kann eine nach Anspruch 4 gestaltete Ausführung hilfreich sein. Hierbei sind die Dämpferschichten mehrschichtig übereinander angeordnet, wodurch sich die projizierte Fläche des Dämpfungselements stark verringert und die Dämpfungselemente besser in die Steuertüte integriert werden können.

Von Vorteil könnte jedoch auch die Ausführung der Dämpfungsanordnung gemäß Anspruch 5 sein, bei der die Dämpfungselemente in der Schwenkebene hintereinander und vorzugsweise parallel zur Mittellängsachse des Flexbeam angeordnet sind. Dadurch kann die seitliche Abmessung (die Weite) der Steuertüte verringert werden, wobei die aerodynamische Eigenschaft verbessert wird.

Nach einer weiteren Ausgestaltung (Anspruch 6) kann der Flexbeamkopf als Befestigungsplatte ausgebildet sein. Es wird damit eine zusätzliche Befestigungsplatte eingespart.

Dabei zeigen

| | |
|---|---|
| **Figur 1** | Anordnung des Dämpfungselements außerhalb der Steuertüte nach dem **Stand der Technik** |
| **Figur 2** | Funktionsprinzip der Dämpferkinematik nach dem **Stand der Technik** |
| **Figur 3** | Neues Funktionsprinzip der Dämpferkinematik mit Dämpfungselementen |
| **Figur 4** | Anordnung von Dämpfungselementen im Übergangsbereich eines zweistückigen Rotorblattes in perspektivischer Ansicht bei aufgeschnittener Steuertüte |
| **Figur 5** | Explosivdarstellung zu Figur 4 |
| **Figur 6** | Flexbeam mit integrierter Befestigungsplatte |
| **Figur 7** | Anordnung von Dämpfungselementen in Reihe in der Schwenkebene angeordnet, aber parallel zur Mittellängsachse des Flex- |

beams.

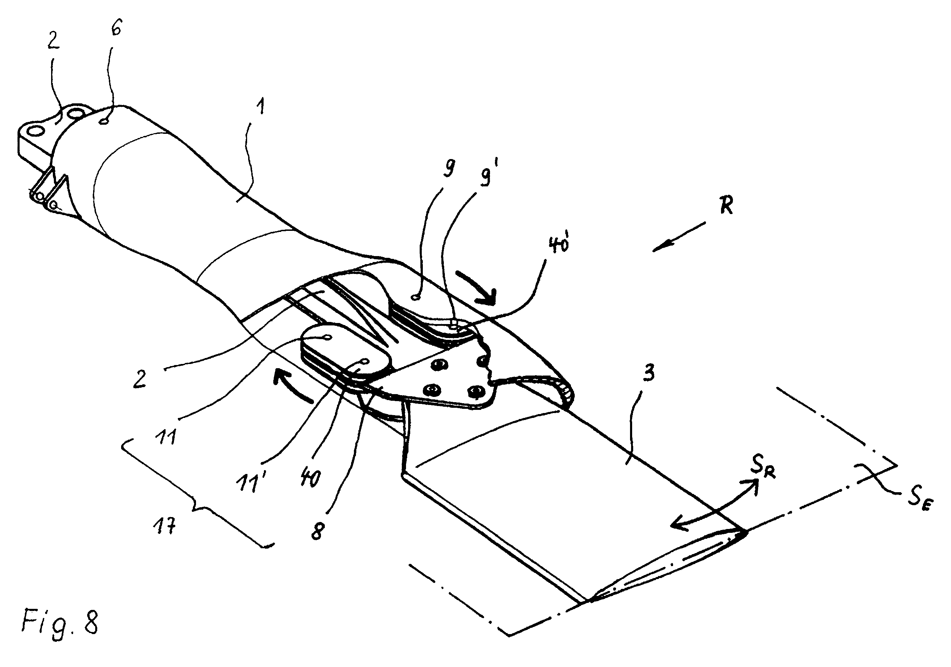

**Figur 8** einstückiges Rotorblatt mit Anordnung der Dämpfungselemente im Übergangsbereich zwischen Flexbeam und auftriebserzeugenden Blatt

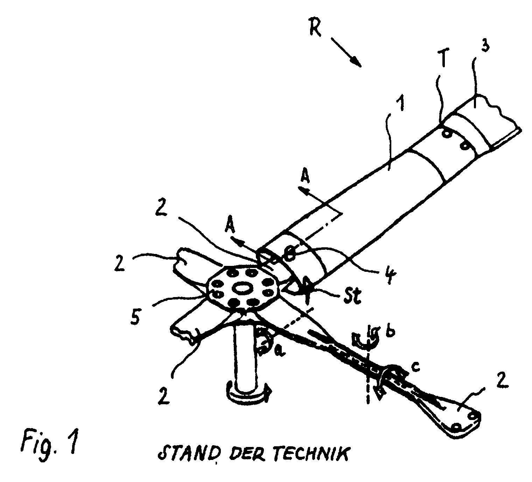

**Figur 1 (Stand der Technik)** zeigt schematisch das Funktionsprinzip eines bekannten lagerlosen Rotors mit 4 Rotorblättern. Der prinzipielle Aufbau eines Rotorblattes R umfaßt den Bereich des auftriebserzeugenden Blattes 3 sowie den zum Rotorkopf 5 hin in Rotorblattlängsrichtung angeordnete Flexbeam 2. Der Flexbeam 2 entspricht einem Strukturelement aus Faserverbund-Werkstoff. Das Ende des Flexbeam 2, welches dem Rotorkopf 5 zugeordnet ist, wird als Wurzel (bzw. Flexbeamwurzel) bezeichnet. Die Flexbeamwurzel ist mit der Nabe der Rotorachse verbunden. Nabe und Rotorachse sind Bestandteil des Rotorkopfes 5. Daß der Wurzel gegenüberliegende Ende vom Flexbeam 2 wird als Flexbeamkopf bezeichnet. Vom Flexbeamkopf erfolgt der Übergang zum auftriebserzeugenden Blatt 3. Dieser Übergang bildet einen Übergangsbereich. Wenn dieser Übergangsbereich nahtlos gestaltet ist, spricht man von einem einstückigen Rotorblatt. Ist jedoch dieser Übergangsbereich mit einer Trennstelle T ausgerüstet, spricht man von einem zweistückigen Rotorblatt. Die an nachfolgender Stelle beschriebene Erfindung ist sowohl für ein einstückiges als auch zweistückiges Rotorblatt anwendbar.
Der bei beiden Arten von Rotorblättern vorkommende Übergangsbereich ist ein Bereich der Anbindung der torsionssteifen Steuertüte 1 an das Rotorblatt R, in welchem Torsionsmomente der Steuerung (über Steuerstange St) an das aerodynamische Blatt 3 eingebracht werden. Die beiden Grenzen des Übergangsbereiches werden festgelegt einerseits durch die Möglichkeit einer Verbindung des äußeren Endes der Steuertüte 1 mit dem Flexbeam 2 und andererseits durch die Möglichkeit einer Verbindung des äußeren Endes der Steuertüte 1 mit dem auftriebserzeugenden Blatt 3. Der Bereich zwischen diesen beiden Grenzen wird als der Übergangsbereich bezeichnet Letztere Grenze (in radialer Richtung zur Blattspitze) bildet das Ende des Übergangsbereiches.

Zwischen Flexbeam 2 mit umhüllender Steuertüte 1 und dem auftriebserzeugenden Blatt 3 befindet sich nach Fig. 1 eine Trennstelle T, die insbesondere einen Austausch des Flexbeam oder des Blattes bzw. eine Blattfaltung ermöglicht.

Der Flexbeam 2 hat integrierte schlag-, schwenk- und torsionsweiche Bereiche a, b und c. Die Steuertüte 1 ist torsionssteif und hat nach dem Stand der Technik in vertikaler Richtung an ihrer Ober- und Unterseite jeweils ein Dämpfungselement 4 angeordnet. Ein Gestänge steht im Eingriff mit einem Befestigungsmittel auf der Oberfläche der Steuertüte 1. Dieses Gestänge St bildet Teil einer Steuerung mit dessen Hilfe eine Kraft zur Winkelverstellung des Rotorblattes R erzeugt wird. Mit dieser Winkelverstellung wird der dem Fachmann bekannte Einstellwinkel des Rotorblattes eingestellt. Die Kraft zur Winkelverstellung wird über die Steuertüte 1 auf den Flexbeam 2 übertragen, wobei der Flexbeam 2 entlang der Mittellängsachse eine Torsionsbewegung ausführt, die zu einer Winkelverstellung des auftrieberzeugenden Blattes 3 führt. Beim rotierenden Rotorblatt R tritt in diesem Zusammenhang eine Schlagbewegung (vertikal zur Rotationsebene) sowie eine Schwenkbewegung (Schwenkung) in der Schwenkebene auf, die im wesentlichen übereinstimmt mit der Rotationsebene des Blattes. Wie das Schema weiter zeigt, besitzt deshalb der Flexbeam ein fiktives Schlaggelenk, fiktives Schwenkgelenk und einen Torsionsbereich. Die Schwenkbewegung des Rotorblattes wird durch die Dämpfungselemente gedämpft. Bezüglich des Flexbeam sind die Dämpfungselemente dem Bereich der Flexbeamwurzel zugeordnet. Die Dämpfungselemente 4, 4' sind mit einer Steuertütenabstützung beweglich mit einem Stützlager verbunden, welches im Wurzelbereich des Flexbeam 2 angeordnet ist.

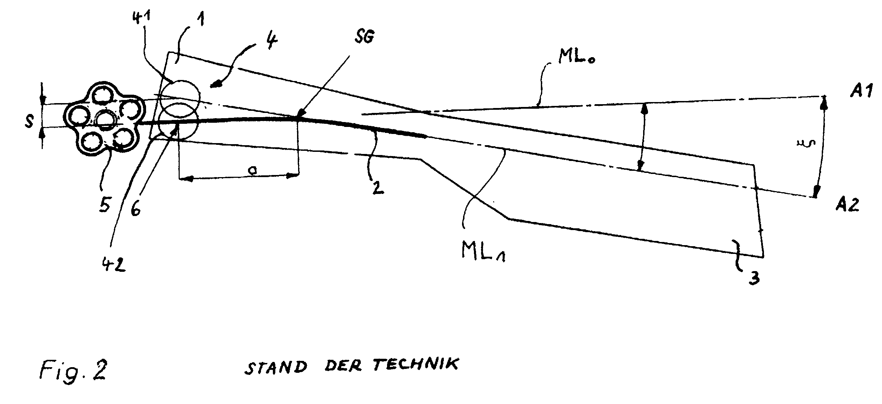

**Figur 2 (Stand der Technik)** zeigt das Funktionsprinzip der Dämpferkinematik der bekannten Anordnung nach Figur 1. Es handelt sich um eine schematisierte Darstellung. Bei einer Schwenkbewegung des Blattes 3 in der Schwenkebene (entspricht der Bildebene) kommt es zu einer Auslenkung der Mittellängsachse $ML_0$ des Flexbeam 2 aus einer Position A 1 in eine Position A2 und wieder zurück. Das Blatt 3 schwenkt somit in einem Winkel $\xi$ um die Mittellängsachse. Aufgrund der steifen Anbindung des Blattes 3 an die Steuertüte 1 und die Steifigkeit der Steuertüte 1 selbst wird jedes Dämpfungselement 4, 4' ausgelenkt, d. h. die Elastomerschichten eines Dämpfungselements erhalten eine Schubverzerrung. Dargestellt ist die Schubverzerrung für das Dämpfungselement 4. Es wird die oberste Schicht 42 gegenüber der untersten Schicht 41 des Dämpfungselements 4 verschoben, was bildlich in der Draufsicht dargestellt ist. Dies ist auch zutreffend für das Dämpfungselement 4' (nicht bildlich gezeigt).
Die Dämpferauslenkung, d. h. die Auslenkung eines Dämpfungselements, erfolgt näherungsweise entsprechend der Formel

$$(1) \qquad S = a * \tan \xi,$$

wobei $\xi$ der Schwenkwinkel ist. Die Größe der Dämpferauslenkung S wird durch den Abstand a zwischen der Steuertütenabstützung 6 und dem Schwenkgelenk SG bestimmt. Aus konstruktiven Gründen ist der Abstand a nicht beliebig veränderbar. Das Schwenkgelenk SG kann aus Festigkeits- und Steifigkeitsgründen nicht weiter nach innen verlegt werden. Die Steuertütenabstützung 6 muß sich dagegen auf den steifen inneren Bereich des Flexbeam 2 abstützen und kann deshalb aus diesem Grunde nicht weiter nach außen (in Richtung des Schwenkgelenks SG) verlagert werden.

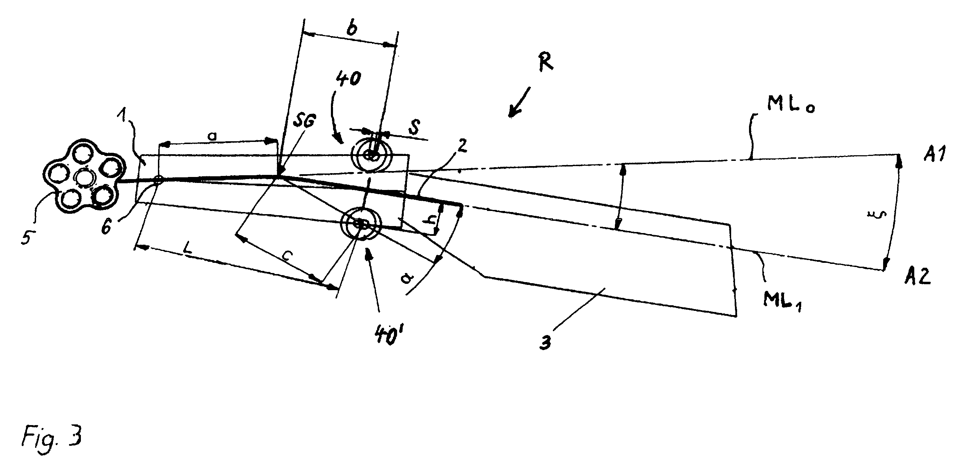

**Figur 3** zeigt das neue Funktionsprinzip der Dämpferkinematik mit Dämpfungselementen 40, 40'. Die Dämpfungselemente 40, 40' sind zwischen dem schwenkweichen Bereich, dem sogenannten fiktiven Schwenkgelenk SG, des Flexbeam 2 und dem Ende eines Übergangsbereiches des Rotorblattes angeordnet. Das äußere Ende der Steuertüte endet ohne formschlüssige Anbindung an das Rotorblatt.

Eine Anbindung der Steuertüte 1 an das Rotorblatt R erfolgt mittels der Dämpfungselemente 40, 40'.

Die Anordnung der Dämpfungselemente 40, 40' im Bereich zwischen fiktiven Schwenkgelenk SG und dem Ende (äußeren Grenze) des Übergangsbereichs des Rotorblatts R unterscheidet sich damit grundsätzlich zum bekannten Stand der Technik, der nur Anordnungen von Dämpfungselementen im Bereich der Wurzel des Flexbeams kennt.

Eine Anordnung der Dämpfungselemente im Bereich der Flexbeamwurzel entfällt.

Es ist nicht entscheidend, ob das Rotorblatt einstückig oder zweistückig gestaltet ist. Die erfindungsgemäße Lösung erbringt den Vorteil, daß die Dämpferauslenkung wesentlich reduziert werden kann ohne Einschränkung der Dämpferfunktion. Damit kann zugleich die Bauhöhe eines Dämpfungselements drastisch reduziert werden. Die Bauhöhe ist um das 3- bis 4-fache der bekannten Bauhöhe reduzierbar. Es wird damit möglich, das Dämpfungselement beispielsweise mit nur noch einer Elastomerschicht ohne Metallzwischenscheiben einzusetzen.

Besitzt das Rotorblatt eine Trennstelle T im Übergangsbereich, so wird in der Regel die Verbindung zwischen Flexbeamkopf und auftrieberzeugenden Blatt mittels einer Befestigungsplatte 8 (auch Beschlages 8 genannt) und dazugehöriger Verbindungsmittel realisiert. Dies ist zweckmäßig beispielsweise aus Gründen der Blattfaltung.

Vorteilhafterweise kann der in Folge der Trennstelle T vorhandene Raum zusätzlich zur Unterbringung der Dämpfungselemente 40, 40' genutzt werden. Die Steuertüte 1 kann damit im Bereich der Flexbeamwurzel aerodynamisch wesentlich günstiger gestaltet werden, da dort die Dämpfungselemente entfallen.

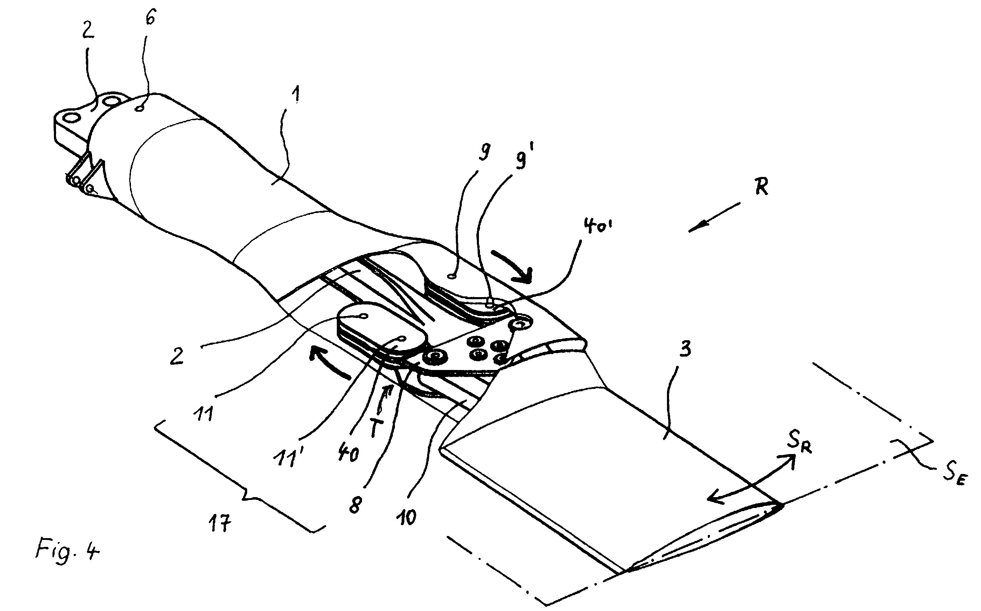

Das Funktionsprinzip nach Figur 3 entspricht auch der Anordnung der Dämpfungselemente wie sie nachfolgend in den Figuren 4, 5, 6 und 7 gezeigt sind.

Die Dämpferauslenkung S zu der Anordnung nach Figur 3 erfolgt nach der Formel

$$(2) \qquad S = L_1 - L_2$$

Wobei

$$(3) \qquad L_1 = \sqrt{{h_1}^2 + (a+b_1)^2}$$

$$h_1 = c*\sin\alpha$$

$$b_1 = c*\cos\alpha$$

$$(4) \qquad L_2 = \sqrt{{h_2}^2 + (a+b_2)^2}$$

$$h_2 = c*\sin(\alpha+\xi)$$

$$b_2 = c*\cos(\alpha+\xi)$$

Der Index 1 in der Formel (3) kennzeichnet den Ausgangszustand vor dem Schwenken. Der Index 2 in der Formel (4) kennzeichnet den geschwenkten Zustand, d. h. die Auslenkung der Elastomerschichten des Dämpfungselements durch Schubverzerrung.

Der Ausgangszustand vor der Auslenkung wird durch die Position A1 der Mittellängsachse $ML_0$ des Flexbeam 2 dargestellt. Der ausgelenkte Zustand des Flexbeam 2 ist mit der Position A2 der Mittellängsachse $ML_1$ erreicht. Bei dieser Auslenkung um das Schwenkgelenk SG erfolgte eine Schwenkung im Winkel $\xi$. Mit der Steuertütenabstützung 6 ist die Steuertüte 1 im Bereich der Blattwurzel des Flexbeam in der Position A1 der Mittellängsachse $ML_0$ fixiert. Es wird sichtbar, daß die mit der Erfindung erzielte Dämpferauslenkung S wesentlich kleiner ist als nach dem geschilderten Stand der Technik (Fig. 2).

Die Dämpferauslenkung S ist bildlich nach Fig. 3 durch Projektion der oberen auf die untere Elastomerschicht je eines Dämpfungselements in der Bildebene gezeigt. Die Dämpferauslenkung S ist hierbei vor allem von der Größe h, dem Dämpferabstand zur Flexbeamachse (entspricht der Mittellängsachse) abhängig.

**Figur 4** zeigt die Anordnung der Dämpfungselemente in perspektivischer Ansicht bei aufgeschnittener Steuertüte 1. Dort ist zu erkennen, daß der Flexbeam 2 in Blattlängsrichtung ausgerichtet ist. Der Übergangsbereich 17 des Rotorblattes bildet einen Übergang vom Flexbeam 2 zum auftrieberzeugenden Blatt 3. Wie Fig. 4 zeigt, endet das (äußere) Ende der Steuertüte 1 beabstandet gegenüber dem Übergangsbereich 17 an der (in radialer Richtung zur Blattspitze gesehen) äußeren Grenze des Übergangsbereichs 17, d. h. dem Ende des Übergangsbereichs. Im Übergangsbereich 17 ist eine Trennstelle T angeordnet, die durch die Befestigungsplatte 8 gebildet wird. Die Befestigungsplatte 8 verbindet den Kopf des Flexbeam 2 mit den Anschlußarmen 10, 10' des auftrieberzeugenden Blattes 3. Das Rotorblatt R ist somit zweistückig. Der Flexbeam 2 ist umgeben von der Steuertüte 1. In Längsrichtung der dem Rotorkopf zugewandten Seite ist die Steuertüte 1 wiederum im inneren Bereich mittels der Steuertütenabstützung 6 an einem Stützlager beweglich abgestützt. Die Dämpfungselemente 40, 40' sind nahe dem Flexbeamkopf im wesentlichen seitlich vom Flexbeam 2 angeordnet. Die Dämpfungselemente 40, 40' sind somit in der Schwenkebene $S_E$ des Rotorblattes R, vorteilhafterweise im Übergangsbereich 17, angeordnet. Sie befinden sich in dem Raum, der von der Steuertüte 1 umhüllt wird.

Durch diese Anordnung der Dämpfungselemente 40, 40' gelingt es - wie Figur 3 zeigt - die Dämpferauslenkung zu verkleinern. Die Pfeilrichtung zeigt die mögliche Schwenkrichtung $S_R$ des Rotorblattes R in der Schwenkebene $S_E$ an. Aufgrund verringerter Verschiebewege der Schichten im Dämpfungselement kann die Bauhöhe des Dämpfungselements geringer gegenüber dem Stand der Technik sein. Durch die verbesserte Anordnung der Dämpfungselemente wird auch der Grad der Beanspruchung des einzelnen Dämpfungselements verringert und somit dessen Lebensdauer erhöht.

Die Dämpfungselemente 40, 40' sind mittels einer Befestigungsplatte 8 mit dem auftrieberzeugenden Blattbereich 3 steif und formschlüssig verbunden. Andererseits sind die Dämpfungselemente 40, 40' mit der Innenwandung der Steuertüte 1 steif verbunden. Somit sind die Befestigungsmittel 11, 11' des Dämpfungselements 40 und die Befestigungsmittel 9, 9' des Dämpfungselements 40' mit der Steuertüte 1 fest verbunden. Es existiert somit keine bekannte formschlüssige Anbindung des äußeren Endes der Steuertüte an das Rotorblatt. Zwischen dem äußeren Ende der Steuertüte und dem Rotorblatt besteht ein kleiner Spalt.

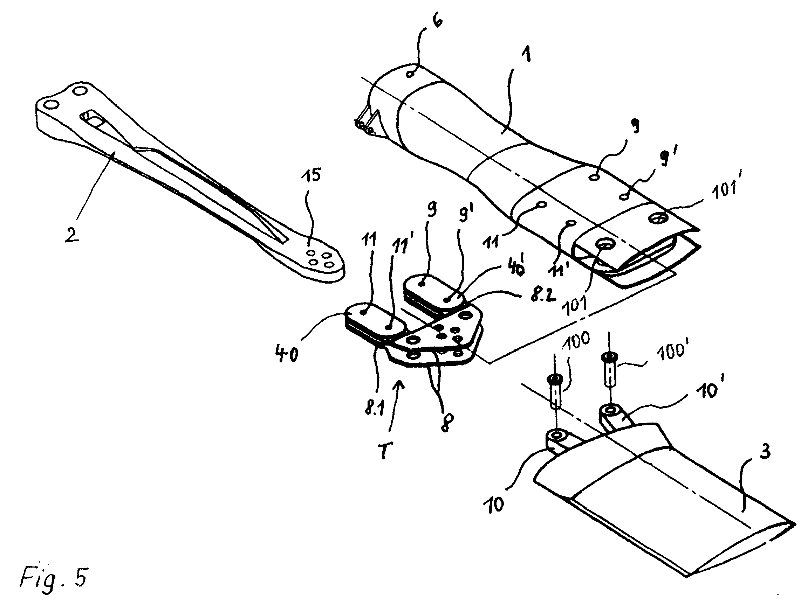

Figur 5 ist eine Explosivdarstellung zu Figur 4 und zeigt neben dem Flexbeam 2, der torsionssteifen Steuertüte 1 und dem auftrieberzeugenden Blattbereich 3 insbesondere die Befestigungsplatte 8, die Bohrungen trägt zur Aufnahme von Verbindungsmitteln. Die Befestigungsplatte 8 ist im wesentlichen U-förmig gestaltet, wobei im Sattel der U-Form mittig eine Aussparung (Langloch) angeordnet ist (in der Figur nicht sichtbar), die den Flexbeamkopf 15 aufnehmen kann. Im Sattel der U-Form, beidseitig der Aussparung, sind zwei Stege 8.1 und 8.2 angeordnet. An diesen Stegen werden die Dämpfungselemente 40, 40' angeordnet Das Dämpfungselement 40 ist beispielsweise so montiert, daß es den Steg 8.1 in seinem Inneren aufnimmt. Analog ist das Dämpfungselement 40' mit dem Steg 8.2 verbunden. Die Befestigungsmittel 9, 9' und 11, 11' (z.B. Bolzenverbindung) sind mit der Steuertüte 1 verbindbar und werden dort aufgenommen. Sie bilden eine feste Verbindung zwischen Steuertüte 1 und Dämpfungselementen 40, 40'. Analoges gilt für die Unterseite der Dämpfungselemente. Der Flexbeamkopf 15 wird durch das Langloch hindurch zwischen den beiden Wandungen der Befestigungsplatte 8 eingeführt und positioniert. Über die erkennbaren Bohrungen im Flexbeamkopf 15 und der Befestigungsplatte 8 werden Befestigungsmittel eingeführt, die eine feste Verbindung zwischen Flexbeamkopf 15 und Befestigungsplatte 8 ermöglichen. In der Befestigungsplatte 8 werden ebenfalls die Anschlußarme 10, 10' des auftrieberzeugenden Blattes 3 angeordnet und dort mittels Befestigungsmittel 100, 100' fixiert. Die beiden Befestigungsmittel 100, 100' werden durch die beiden Bohrungen 101, 101' im Bereich des äußeren Endes der Steuertüte ohne Anschlag hindurchgeführt, d.h. die Steuertüte 1 selbst ist durch diese beiden

Besfestigungsmittel 100, 100' nicht fixiert. Bei einer Montage der Dämpfungselemente 4, 4' gegenüber der Befestigungsplatte 8 können auch mehrere Dämpfungselemente übereinander angeordnet sein.

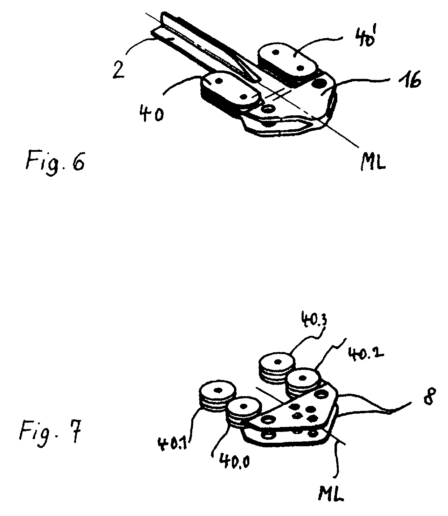

Figur 6 zeigt eine besonders vorteilhafte Ausbildung eines Flexbeamkopfes. Nach der vorliegenden Figur 7 wurde der Flexbeamkopf entsprechend der Gestalt einer Befestigungsplatte 16 ausgebildet. Es entfällt damit die Montage einer zusätzlichen Befestigungsplatte (beispielsweise der Befestigungsplatte 8) am Flexbeamkopf. Bei dem nach Figur 6 ausgebildeten Flexbeamkopf entsprechend einer Befestigungsplatte 16 sind die Dämpfungselemente 40, 40' ebenfalls wie bereits beschrieben zu montieren.

Figur 7 zeigt eine weitere Ausgestaltungsmöglichkeit. Im Zusammenhang mit einer Befestigungsplatte 8 oder im Zusammenhang mit einem als Befestigungsplatte 16 ausgebildeten Flexbeamkopf können mehrere, einzelne Dämpfungselemente 40.0, 40.1, 40.2, 40.3 in einer Ebene, vorzugsweise parallel zur Mittellängsachse ML des Flexbeam 2 hintereinander angeordnet sein. Dadurch kann die seitliche Abmessung der Stautüte verringert werden. Die Dämpfungselemente 40.0, 40.1 entsprechen dabei einem Dämpfungselement 40 und analog die Dämpfungselemente 40.2, 40.3 einem Dämpfungselement 40'.

Figur 8 zeigt eine Anordnung der Dämpfungselemente 40, 40' am Beispiel eines einstückigen Rotorblatts R. Der Flexbeam 2 geht nahtlos in das auftrieberzeugende Blatt 3 über. Der Flexbeam 2 ist von Steuertüte 1 umhüllt. Ein Ende der Steuertüte ist mittels der Steuertütenabstützung 6 an einem Stützlager abgestützt. Die Dämpfungselemente 40, 40' sind vorteilhaft im Übergangsbereich 17 des Rotorblatts R positioniert. Eine ebenso dort positionierte Befestigungsplatte 8 ist im Übergangsbereich 17 mit dem Rotorblatt R verbunden (z.B. mittels 4 Bolzenverbindungen) und trägt die Dämpfungselemente 40, 40'. Diese sind mittels Befestigungsmittel 9, 9' und 11, 11' an der Befestigungsplatte 8 und der Steuertüte 1 befestigt. Die Anbindung an die Steuertüte erfolgt in einem Bereich (d.h. im Bereich der Befestigungsmittel 9, 9' und 11, 11') in Nähe des (äußeren) Endes der Steuertüte. Das (äußere) Ende der Steuertüte 1 bildet einen Spalt entlang seines Umfangs gegenüber dem Blatt 3.

Das (äußere) Ende der Steuertüte 1 ist also nicht formschlüssig mit der Steuertüte verbunden. Die Steuertüte 1 ist zur besseren Ansicht aufgeschnitten. Es ist erkennbar, daß die Dämpfungselemente 40, 40' in der Schwenkebene $S_E$ seitlich vom Flexbeam 2 positioniert sind.

**Patentansprüche**

1. Rotorblatt für einen lagerlosen Rotor eines Hubschraubers, wobei das Rotorblatt einen Flexbeam (2) mit integrierten schlag-, schwenk- und torsionsweichen Bereichen besitzt, der am Rotorkopf (5) befestigt ist und der in Rotorblattlängsrichtung in einem übergangsbereich (17) in das auftrieberzeugende Blatt (3) übergeht, wobei eine torsionssteife Steuertüte (1) an der Wurzel des Flexbeam (2) beweglich abgestützt ist und die Steuertüte (1) in Blattlängsrichtung bis zu ihrem Ende den Flexbeam (2) umhüllt, und Dämpfungselemente (40, 40') angeordnet sind zur Dämpfung des rotierenden Rotorblatts in der Schwenkebene, **dadurch gekennzeichnet, daß** die Dämpfungselemente (40, 40') angeordnet sind zwischen dem schwenkweichen Bereich (SG) des Flexbeam (2) und dem Ende des Übergangsbereiches (17) und in der Schwenkebene (SE) des Rotorblattes (R) im wesentlichen seitlich vom Flexbeam (2) liegend wobei die Dämpfungselemente (40, 40') dort mit dem Flexbeam (2) und der Steuertüte (1) verbunden sind

2. Rotorblatt nach Anspruch 1, **dadurch gekennzeichnet, daß** Dämpfungselemente (40, 40') lösbar mit der umhüllenden Steuertüte (1) und dem Rotorblatt (R) verbunden sind.

3. Rotorblatt nach einem der vorhergehenden Ansprüche, **dadurch gekennzeichnet, daß** das Dämpfungselement (40, 40') einerseits an einer Befestigungsplatte (8) befestigt ist, die mit dem Rotorblatt (R) im Übergangsbereich (17) verbunden ist und andererseits mit der Steuertüte (1) befestigt ist.

4. Rotorblatt nach einem der vorhergehenden Ansprüche, **dadurch gekennzeichnet, daß** mehrere Dämpfungselemente übereinander angeordnet sind.

5. Rotorblatt nach einem der vorhergehenden Ansprüche, **dadurch gekennzeichnet, daß** mehrere Dämpfungselemente in der Schwenkebene (S$_E$), vorzugsweise parallel zur Mittellängsachse (ML) des Flexbeam (2) hintereinander angeordnet sind.

6. Rotorblatt nach Anspruch 1, **dadurch gekennzeichnet, daß** der Flexbeamkopf als Befestigungsplatte (16) ausgebildet ist.

**Claims**

1. Rotor blade for a bearingless helicopter rotor wherein the rotor blade possesses a flexbeam (2) with integrated areas of low flap-, swivel- and torsion-resistance, which flexbeam is attached to the rotor hub (5) and in the longitudinal direction of the rotor blade changes in a transition area (17) into the lift-generating blade (2), wherein a torsion-rigid control sheath (1) is supported against the root of the flexbeam (2) and the control sheath (1) encases the flexbeam along the length of the blade as far as its end and damping elements (40, 40') are arranged to dampen the rotating rotor blade in the swivel plane, **characterised in that** the damping elements (40, 40') are arranged between the low-swivel-resistance area (SG) of the flexbeam (2) and the end of the transition area (17) and essentially lying laterally from the flexbeam (2) in the swivel plane (SE) of the rotor blade (R), the damping elements (40, 40') being connected there to the flexbeam (2) and the control sheath (1).

2. Rotor blade according to Claim 1, **characterised in that** damping elements (40, 40') are connected to the enveloping control sheath (1) and the rotor blade (R) in a detachable manner.

3. Rotor blade according to one of the preceding Claims, **characterised in that** the damping element (40, 40') is on the one hand attached to a fastening plate (8) which is connected to the rotor blade in the transition area (17) and on the other hand is attached to the control sheath (1).

4. Rotor blade according to one of the preceding Claims, **characterised in that** several damping elements are arranged one above the other.

5. Rotor blade according to one of the preceding Claims, **characterised in that** several damping elements are arranged in the plane of rotation (SE) one behind the other preferentially parallel to the central longitudinal axis (ML) of the flexbeam (2).

6. Rotor blade according to Claim 1, **characterised in that** the flexbeam head is in the form of a fastening plate (16).

**Revendications**

1. Pale de rotor pour un rotor sans palier d'hélicoptère, la pale intégrant une poutre flexible (2) avec des zones intégrées, souples en battement, en pivotement et en torsion, cette poutre souple étant fixée à la tête (5) du rotor alors que dans la direction longitudinale du rotor cette poutre rejoint dans une zone transitoire (17), la lame (3) générant la force ascensionnelle, tandis qu'un manchon de commande (1) rigide en torsion appuyé de manière mobile à la base de la poutre flexible (2) entoure la poutre flexible (2) dans la direction longitudinale de la lame jusqu'à son extrémité avec des éléments amortisseurs (40, 40') pour amortir la pale de rotor en mouvement de rotation, dans le plan de pivotement,
**caractérisée en ce que**
les éléments amortisseurs (40, 40') sont installés entre la zone souple en pivotement (SG) de la poutre flexible (2) et l'extrémité de la zone transitoire (17) et sont situés dans le plan de pivotement (SE) de la pale de rotor (R) essentiellement à côté de la poutre flexible (2), les éléments amortisseurs (40, 40') étant reliés à cet endroit à la poutre flexible (2) et au manchon de commande (1).

2. Pale de rotor selon la revendication 1,
**caractérisée en ce que**
les éléments amortisseurs (40, 40') sont reliés de manière amovible au manchon de commande (1) qui les entoure et à la pale de rotor (R).

3. Pale de rotor selon l'une des revendications précédentes,
**caractérisée en ce que**
l'élément amortisseur (40, 40') est fixé d'un côté à une plaque de fixation (8) elle-même reliée à la pale de rotor (R) dans la zone transitoire (17) et d'autre part au manchon de commande (1).

4. Pale de rotor selon l'une des revendications précédentes,
**caractérisée par**
plusieurs éléments amortisseurs superposés.

5. Pale de rotor selon l'une des revendications précédentes,
**caractérisé par**
plusieurs éléments amortisseurs installés dans le plan de pivotement (SE) de préférence parallèlement à l'axe longitudinal médian (ML) de la poutre flexible (2), les uns derrière les autres.

6. Pale de rotor selon la revendication 1,
**caractérisée en ce que**
la tête de la poutre flexible est réalisée comme plaque de fixation (16).

Fig. 1

STAND DER TECHNIK

STAND DER TECHNIK

Fig. 2

Fig. 3

Fig. 4

Fig. 5

EP 1 070 662 B1

Fig. 6

Fig. 7

Fig. 8

EP 1 070 662 B1